# EUROPEAN PATENT SPECIFICATION

(11) **EP 3 834 921 B1**
(45) Date of publication and mention of the grant of the patent: **27.03.2024**
(21) Application number: 20213610.7
(22) Date of filing: 11.12.2020
(51) Int. Cl.: B01F 27/07, B01F 27/81, B01F 35/33, A23G 9/22

(54) **ROTABLE MIXING MEMBER FOR PASTEURIZING MACHINES AND THE LIKE AND FOODSTUFF THERMAL-TREATING MACHINE PROVIDED WITH SUCH MIXING MEMBER**
ROTIERENDES MISCHELEMENT FÜR PASTEURISIERUNGSMASCHINEN UND DERGLEICHEN UND MASCHINE ZUR THERMISCHEN BEHANDLUNG VON NAHRUNGSMITTELN MIT EINEM SOLCHEN MISCHELEMENT
ÉLÉMENT DE MÉLANGE ROTATIF POUR MACHINES DE PASTEURISATION ET SIMILAIRES ET MACHINE DE TRAITEMENT THERMIQUE DE DENRÉES ALIMENTAIRES MUNIE D'UN TEL ÉLÉMENT DE MÉLANGE

(30) Priority: 12.12.2019 IT 201900023811
(43) Date of publication of application: 16.06.2021
(73) Proprietor: Valmar Global VSE ZA Sladoled D.O.O., 5293 Volcja Draga (SI)
(72) Inventor: JEJCIC, Valter, 5000 NOVA GORICA (SI)
(74) Representative: Studio Torta S.p.A.

(56) References cited:
- GB-A- 1 100 782
- US-A- 4 499 562

## Description

### CROSS-REFERENCE TO RELATED APPLICATIONS

This patent application claims priority from Italian patent application no. 102019000023811 filed on 12/12/2019.

### TECHNICAL FIELD

The present invention relates to a rotatable mixing member for pasteurizing machines and the like and to a foodstuff thermal-treating machine provided with such mixing member.

In more detail, the present invention relates to a rotatable mixing member and to a foodstuff thermal-treating machine specifically structured to pasteurize milk preferably intended for the production of ice cream, custards, and the like. Use to which the following description will make explicit reference without thereby losing generality.

### BACKGROUND ART

As is known, pasteurizing machines normally used for pasteurizing milk intended for the production of ice cream, custards, and the like are provided with a large working tank, usually roughly rectangular in shape, which is open at the top and is dimensioned to contain several tens of litres of milk to be pasteurized; with a manual opening and closing drain spigot that protrudes from the front face of the machine and communicates directly with the bottom of the working tank so as to allow the tank to be quickly emptied at the end of the pasteurization process; with an electrically-operated heating device that is housed inside the machine and is capable of quickly bringing the working tank and the contents thereof to a temperature ranging between +50°C and +110°C; and with an electrically-operated cooling device that is housed inside the machine and is capable of bringing and maintaining the working tank and the contents thereof to/at a temperature ranging between 0°C and +10°C.

Moreover, the above-mentioned pasteurizing machines are also provided with a rotatable mixing member, which is located in the centre of the working tank, locally coaxial with the longitudinal /vertical axis of the tank, and is capable of can rotating about its longitudinal axis to mix and homogenize the milk contained in the tank; and with an electric motor, which is located underneath the working tank and is adapted to drive the mixing member into rotation during the milk pasteurization process.

In more detail, in most pasteurizing machines currently on the market, the mixing member is basically formed by an oblong central hub substantially tubular cylindrical in shape, which is fitted in angularly rigid manner onto a supporting shaft that juts out cantilevered from the bottom of the tank while remaining coaxial with the longitudinal/ vertical axis of the tank, and is driven into rotation by the electric motor; and by a disc-shaped impeller which is rigidly keyed to the hub, close to the lower end of the latter, so as to be parallel and substantially flush with the bottom of the working tank.

GB1100782A discloses a pasteurizing machine wherein the rotatable mixing member includes: a supporting central shaft that juts out cantilevered from the bottom of the working tank; a stationary cup-shaped body which is fitted onto the supporting shaft and is provided, on the peripheral wall, with a series of small fat-breaking through-openings; and a central impeller which is accommodated within the cup-shaped body and is rigidly secured to the central shaft so as to rotate together with the shaft.

### DISCLOSURE OF INVENTION

Aim of the present invention is to enhance the ability of the mixing member to homogenize the milk inside the working tank, so as to obtain a more stable, soft and creamy mixture.

In accordance with these aims, according to the present invention there is provided a rotatable mixing member for pasteurizing machines and the like as defined in Claim 1 and preferably, though not necessarily, in any one of the claims dependent thereon.

Moreover according to the present invention there is provided a foodstuff thermal-treating machine as defined in Claim 13 and preferably, though not necessarily, in any one of the claims dependent thereon.

### BRIEF DESCRIPTION OF THE DRAWINGS

The present invention will now be described with reference to the accompanying drawings, which illustrate a non-limiting embodiment thereof, in which:
- Figure 1 is an axonometric view, with parts removed for clarity's sake, of a foodstuff thermal-treating machine provided with a rotatable mixing member realized according to the teachings of the present invention;
- Figure 2 is an axonometric view of the rotatable mixing member shown in Figure 1;
- Figure 3 is an exploded perspective view of the rotatable mixing member shown in Figure 2; whereas
- Figures 4 and 5 show the operation of the rotatable mixing member shown in Figures 2 and 3 inside the working tank of the foodstuff thermal-treating machine shown in Figure 1.

### BEST MODE FOR CARRYING OUT THE INVENTION

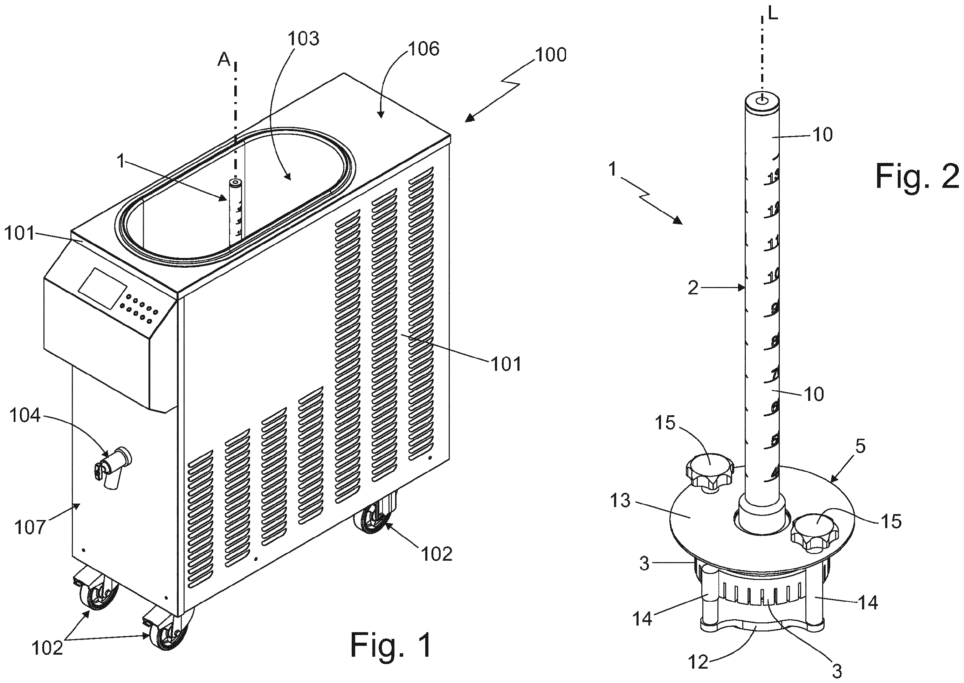

With reference to Figures 1 and 2, number 1 denotes, as a whole, a rotatable mixing member particularly suitable to be mounted/used in a machine for the thermal treatment of liquid foodstuff.

In more detail, the rotatable mixing member 1 is adapted to be accommodated in axially rotatable manner inside the working tank of a foodstuff thermal-treating machine 100, with the function of mixing and homogenizing the liquid present into the working tank.

Even more specifically, the rotatable mixing member 1 is particularly adapted to be mounted/used in a machine for the thermal treatment of milk and/or of a derivative thereof (for example powdered milk and water), i.e. a pasteurizing machine.

In addition, the rotatable mixing member 1 is particularly adapted to be mounted/used in a pasteurizing machine for production of ice cream, custards and the like, i.e. a machine specifically structured for pasteurizing milk or a derivative thereof intended for the production of ice cream, custards and the like.

With reference to Figure 1, in particular, the foodstuff thermal-treating machine 100, or rather the pasteurizing machine, comprises: a preferably substantially parallelepi-pedal in shape, outer box-like casing 101 which has a rigid self-supporting structure and is preferably provided with a plurality of ground resting wheels 102; a preferably substantially rectangular in shape, large working tank 103 which is intended to contain milk or other liquid to be pasteurized, and is arranged inside the box-like casing 101 with the upper opening easily accessible from the outside; a drain spigot 104 with a preferably manually-operated shut-off valve, which communicates directly with the bottom of the working tank 103 so that it can drain the contents of the working tank 103 outside the machine; and preferably also a removable lid (not shown) which is adapted to close/ plug up the upper opening of the working tank 103.

In more detail, the working tank 103 preferably has a pit-like structure and is preferably arranged inside the box-like casing 101 with the longitudinal axis A in a substantially vertical position.

In the example shown, in particular, the working tank 103 is preferably made of steel and has a nominal capacity preferably ranging between 20 and 180 litres.

Preferably, the working tank 103 is moreover recessed into the upper wall 106 of box-like casing 101, and the longitudinal axis A of the working tank 103 is preferably substantially perpendicular to the same upper wall 106.

In other words, the upper wall 106 of box-like casing 101 is preferably substantially flat and/or substantially horizontal.

Preferably, on the other hand, the drain spigot 104 juts out cantilevered from the front wall 107 of box-like casing 101. Preferably, the drain spigot 104 is moreover provided with a sliding piston shut-off valve.

Inside the box-like casing 101, moreover the foodstuff thermal-treating machine 100 comprises: an electrically-operated heating assembly (not shown in the figures), which is structured so as to heat up the working tank 103 and the contents thereof to a predetermined maximum temperature preferably higher than +50°C; and preferably also an electrically-operated refrigerating assembly (not shown in the figures), which is structured so as to cool down the tank 103 and the contents thereof to a predetermined minimum temperature preferably lower than +10°C.

In more detail, the heating assembly is preferably at least partially located in contact with the bottom wall and/or the side walls of the working tank 103 and is able to bring and maintain the tank 103 and the contents thereof to/at a temperature higher than +50°C and preferably ranging between +70°C and +110°C.

Similarly, the refrigerating assembly is preferably at least partially located in contact with the bottom wall and/or the side walls of the working tank 103 and is able to bring and maintain the tank 103 and the contents thereof to/at a temperature lower than +10°C and preferably ranging between +0°C and +10°C.

In the example shown, in particular, the heating assembly preferably comprises: a resistor firmly fixed in abutment against the bottom wall of the working tank 103, so that the heat produced can be transferred by conduction to the tank 103 and the contents thereof; and a preferably electronically controlled, power supply unit which is able to circulate in the resistor an electric current with a given and adjustable value.

The refrigerating assembly, in turn, preferably includes an electrically-operated heat-pump apparatus that won't be further described as it is already widely used in the pasteurizing machines currently on the market.

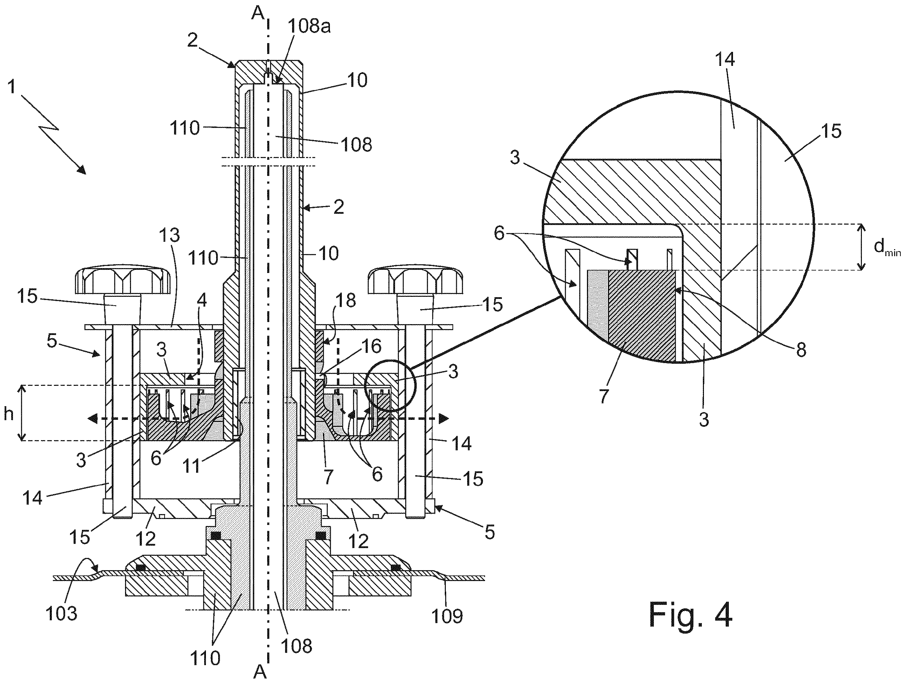

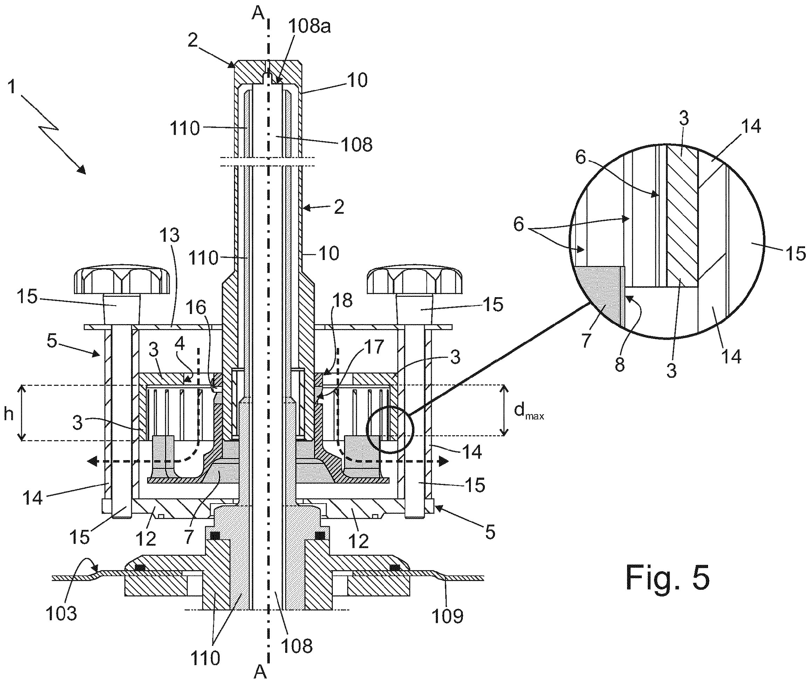

With reference to Figures 4 and 5, the foodstuff thermal -treating machine 100 is moreover provided with a rotatable shaft 108 that sticks out cantilevered from the bottom of the working tank 103, while remaining substantially coaxial or in any case parallel to the tank longitudinal axis A, and can rotate about its longitudinal axis; and an electrically-operated motor assembly (not shown in the figures), which is preferably located underneath the working tank 103 and is adapted to drive the rotatable shaft 108 into rotation about its longitudinal axis, i.e. about the tank longitudinal axis A, with a rotating direction and, preferably, also a speed variable on command.

In more detail, the rotatable shaft 108 is preferably made of steel, and is preferably fitted in axially rotatable manner into a, preferably oblong-shaped, tubular support hub 110 that juts out cantilevered from the bottom of working tank 103, while remaining substantially coaxial with the tank longitudinal axis A, and is integral with the bottom of the tank. Preferably, the upper end 108a of rotatable shaft 108 moreover juts out cantilevered from the upper end of tubular hub 110.

In other words, the tubular hub 110 is preferably inserted in pass-through manner into the bottom wall 109 of working tank 103 and is fixed in rigid and fluid-tight manner to the bottom wall 109. Preferably, the tubular hub is also made of steel.

On the other hand, the motor assembly preferably comprises: an electric gearmotor or the like, which is preferably located beneath the working tank 103, close to the bottom of the tank, and is mechanically connected to the rotatable shaft 108 so as to be able to drive the shaft into rotation about its longitudinal axis; and preferably also an electronically-controlled inverter that powers the electric gearmotor so as to regulate/vary at will the rotating direction (clockwise or anti-clockwise) and the rotation speed of the rotatable shaft 108.

Lastly, the foodstuff thermal-treating machine 100 preferably also comprises an electronic control unit (not shown in the figures), which is located inside the box-like casing 101 and is adapted to control the heating assembly, the refrigerating assembly and the motor assembly, so as to automatically perform the pasteurizing of the milk contained in the working tank 103.

With reference to Figures 1, 4 and 5, the rotatable mixing member 1 is located adjacent to the bottom of the working tank 103, preferably substantially coaxial or in any case substantially parallel to the tank longitudinal axis A, with the capability of rotating about its longitudinal axis L. The rotatable mixing member 1 is moreover structured so to mix and homogenize, while rotating inside the working tank 103, the milk in the working tank 103.

In more detail, the rotatable mixing member 1 is preferably coupled in angularly rigid manner to the rotatable shaft 108, so as to be locally substantially coaxial with the rotatable shaft 108 and to be able to rotate inside the working tank 103 together with the rotatable shaft 108.

Preferably, the rotatable mixing member 1 is moreover coupled to the rotatable shaft 108 in a stable, though manually detachable and extractable manner, so as to be easily removed from the working tank 103.

In other words, the rotatable mixing member 1 is preferably coupled to the rotatable shaft 108 in a rigid and stable, though easily removable manner.

In the example shown, in particular, the rotatable mixing member 1 is preferably fitted onto the tubular hub 110 in a freely rotatable and easily removable manner and is moreover connected in angularly rigid and easily detachable manner to the upper end 108a of rotatable shaft 108.

With reference to Figures 2, 3, 4 and 5, in particular, the rotatable mixing member 1 comprises: a preferably substantially cylindrical in shape, oblong central hub 2 which extends coaxially with the longitudinal axis L of the mixing member, and is structured/dimensioned so as to couple in angularly rigid manner to the rotatable shaft 108; and a preferably substantially cylindrical in shape, rigid cup-shaped body 3 which is provided with a large central through hole 4 and fitted with clearance on the lower segment of the oblong central hub 2, preferably with the concavity facing the lower end of the oblong central hub 2, i.e. with the concavity facing the bottom of the working tank 103.

In more detail, in the example shown, the oblong central hub 2 is preferably dimensioned so as to be fitted in free rotatable manner on the tubular hub 110 that supports the rotatable shaft 108, and has its upper end structured to couple in angularly rigid manner to the upper end 108a of rotatable shaft 108.

The rotatable mixing member 1 moreover comprises a rigid framework 5, which is preferably adapted to be stably arranged in abutment on the bottom of the working tank 103 and is structured so as to support and maintain the cup-shaped body 3 coaxial with the oblong central hub 2, i.e. coaxial with the longitudinal axis L of the mixing member, preferably while also preventing the cup-shaped body 3 from rotating about the longitudinal axis L together with the oblong central hub 2.

In more detail, the rigid framework 5 is preferably structured so as to rest and optionally couple to the base of tubular hub 110 on the bottom of the working tank 103, in a removable and preferably also angularly rigid manner.

The cup-shaped body 3 is additionally provided with a series of small fat-breaking through-openings 6 which are distributed along the peripheral wall of the cup-shaped body 3, preferably in a substantially uniform manner, and are shaped/dimensioned so as to cause the breakdown of fat globules in suspension in the milk or other liquid passing through the same through-openings 6.

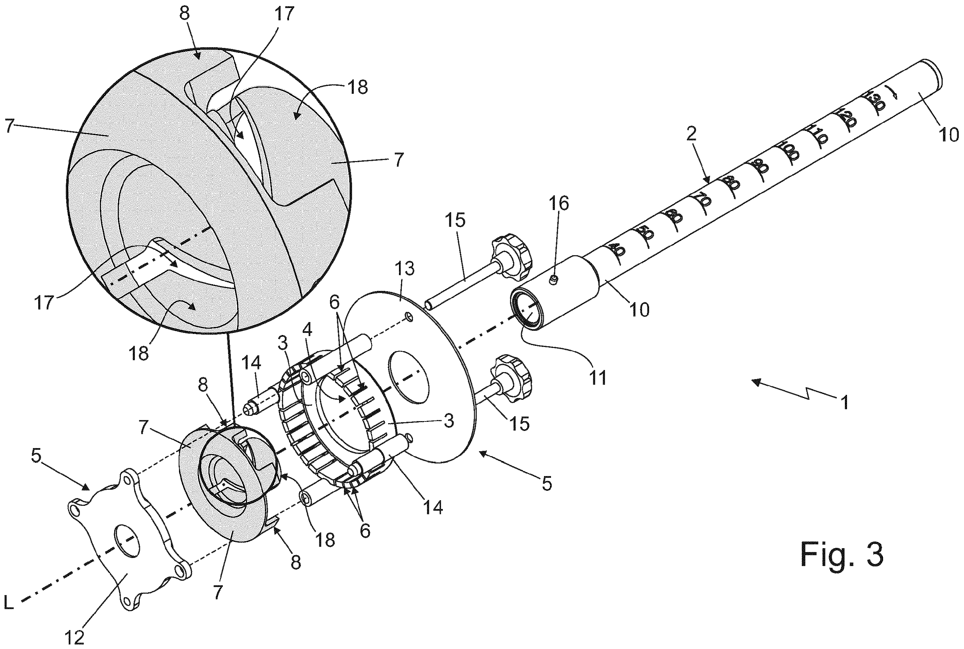

With reference to Figures 3, 4 and 5, the rotatable mixing member 1 moreover comprises an impeller 7 which preferably has a shape substantially complementary to that of the cavity of the cup-shaped body 3 and is fitted in angularly rigid manner to the lower segment of the oblong central hub 2, with the capability of moving axially along the oblong central hub 2 between a first operating position (see Figures 2 and 4), in which the impeller 7 is at a predetermined minimum distance from the bottom/crown of the cup-shaped body 3, and a second operating position (see Figure 5) in which the impeller 7 is at a predetermined maximum distance from the bottom/crown of the cup-shaped body 3.

In more detail, the impeller 7 is preferably a cup-shaped impeller preferably substantially cylindrical in shape, and is preferably fitted on the lower segment of the oblong central hub 2 with the concavity facing the cup-shaped body 3.

In addition, the impeller 7 is mechanically coupled to the oblong central hub 2 so as to arrange itself in the first operating position when the oblong central hub 2 rotates in a clockwise direction, and to arrange itself in the second operating position when the oblong central hub 2 rotates in an anticlockwise direction, or vice versa.

In other words, the impeller 7 is mechanically coupled to the oblong central hub 2 so as to arrange itself in the first or second operating position according to the rotating direction of the oblong central hub 2 about the longitudinal axis L.

In more detail, with reference to Figures 4 and 5, in the first operating position, the impeller 7 is preferably substantially entirely contained within the cup-shaped body 3.

In other words, in the first operating position, the blades 8 of impeller 7 preferably face and are preferably substantially skimmed over the cylindrical side wall of the cup-shaped body 3, substantially throughout the whole height of the blades.

In the second operating position, instead, the impeller 7 at least partially protrudes outside of cup-shaped body 3, so that the blades 8 of the impeller jut out cantilevered outside of the cup-shaped body 3 or are entirely placed outside of the cup-shaped body 3.

With reference to Figure 4, in the example shown, in particular, in the first operating position, the impeller 7 engages the cup-shaped body 3 so that the tips of its blades 8 are placed at a minimum distance dₘᵢₙ from the bottom/crown of the cup-shaped body 3 preferably less than 5 mm (millimetres).

In the second operating position, on the other hand, the impeller 7 engages the cup-shaped body 3 so that the tips of its blades 8 are placed at a maximum distance dₘₐₓ from the bottom/crown of the cup-shaped body 3 substantially equal to the height h of the cylindrical side wall of the cup-shaped body 3.

In other words, when it is in the second operating position, the impeller 7 is preferably entirely, or almost entirely, placed outside of the cup-shaped body 3.

Obviously, the maximum distance dₘₐₓ from the bottom/ crown of cup-shaped body 3 could also be greater than the height h of the cylindrical side wall of the cup-shaped body 3.

With reference to Figures 2, 3, 4 and 5, in the example shown, in particular, the upper end of oblong central hub 2 is preferably structured so as to be fitted onto the rotatable shaft 108 in angularly rigid and manually extractable manner.

In more detail, the oblong central hub 2 preferably comprises: a straight tubular quill 10 preferably made of steel, which extends coaxially with the longitudinal axis L, is substantially cylindrical in shape, and is dimensioned so as to be telescopically fitted onto the rotatable shaft 108, or rather onto the tubular hub 110 supporting the rotatable shaft 108; and a support bushing 11 preferably made of plastic material, which is rigidly keyed inside the straight tubular quill 10, coaxial with the longitudinal axis L, and is shaped so as to rest in free rotatable/slidable manner on a corresponding portion of the tubular hub 110 that supports the rotatable shaft 108.

Preferably, the straight tubular quill 10 is moreover structured so as to engage/couple, in angularly rigid and preferably also removable manner, to the upper end of the rotatable shaft 108.

The cup-shaped body 3, on the other hand, preferably consists of a cap/half-shell substantially in the shape of a cylindrical bowl, which is preferably made of steel, and is provided, on the bottom/crown, with a large, circular-shaped, through-opening having a diameter significantly greater than the outer diameter of the oblong central hub 2, or rather of the straight tubular quill 10 of the oblong central hub 2.

The fat-breaking through-openings 6 of the cup-shaped body 3, on the other hand, preferably consist of a series of narrow, oblong and preferably also rectilinear, through-slits that are distributed throughout the whole cylindrical side wall of the half-shell, preferably in a substantially uniform manner.

Preferably, the oblong through-slits moreover extend on the cylindrical side wall of the half-shell, more or less parallel to the longitudinal axis of the half-shell, preferably for the whole height of the cylindrical side wall of the half-shell.

Lastly, the maximum width of the oblong through-slits is preferably less than 2 mm (millimetres).

With reference to Figures 3, 4 and 5, the rigid framework 5, on the other hand, preferably consists of a substantially cylindrical, squirrel-cage structure, which extends coaxially with the oblong central hub 2 and is dimensioned so as to accommodate inside itself the cup-shaped body 3 and the impeller 7.

In addition, the squirrel-cage structure is preferably made of steel and is preferably structured so as to be able to couple/engage in angularly rigid manner to the base of tubular hub 110 located on the bottom of working tank 103.

In more detail, the rigid framework 5 preferably comprises: a substantially discoidal and annular-shaped, lower plate 12 and upper plate 13 that are coaxial with the longitudinal axis L and fitted on the oblong central hub 2, on opposite sides of cup-shaped body 3 and impeller 7; and a series of longitudinal rods or struts 14 that are angularly distributed around the cup-shaped body 3 and the impeller 7, and adapted to rigidly connect the lower plate 12 and the upper plate 13 to each other.

At least one and preferably all the longitudinal rods or struts 14 are moreover rigidly connected to the cup-shaped body 3.

In more detail, the lower plate 12 is preferably provided with a central, circular-shaped through-hole with a diameter greater than the outer diameter of the oblong central hub 2, or rather of the straight tubular quill 10 of oblong central hub 2, and/or greater than the outer diameter of the rotatable shaft 108, and it is arranged coaxial with the oblong central hub 2, substantially coplanar with the lower end of the oblong central hub 2.

Preferably, the lower plate 12 is moreover structured/ shaped so as to be able to fit in angularly rigid manner onto the base of the tubular hub 110 located on the bottom of working tank 103.

In other words, the lower plate 12 is adapted to be arranged in abutment on the bottom of the working tank 103.

The upper plate 13, in turn, is preferably substantially circular in shape and preferably has a large, circular-shaped central through-hole with a diameter greater than the outer diameter of the oblong central hub 2, or rather of the straight tubular quill 10.

Preferably, the upper plate 13 is moreover spaced from the cup-shaped body 3 and fitted onto the oblong central hub 2 substantially coplanar with the upper end of the lower segment of the oblong central hub 2.

The lower segment of oblong central hub 2 is therefore longitudinally delimited by the lower plate 12 and the upper plate 13.

The longitudinal rods or struts 14, in addition, are preferably spaced substantially evenly around the cup-shaped body 3 and the impeller 7, and preferably extend from the upper plate 13 to the lower plate 12 parallel to the longitudinal axis L.

In other words, the longitudinal rods or struts 14 are preferably substantially rectilinear and extend parallel to the oblong central hub 2, or rather to the straight tubular quill 10 of the hub.

Lastly, the axial ends of the longitudinal rods or struts 14 are preferably rigidly fixed to the lower 12 and upper 13 plates by a series of anchoring bolts 15, which preferably extend in pass-through manner for the whole length of the longitudinal rods or struts 14.

Lastly, with reference to Figures 3, 4 and 5, the impeller 7 is preferably made of steel or plastic, and is preferably provided with a discoidal circular-shaped portion having an outer diameter slightly smaller than the inner diameter of the cup-shaped body 3; and with a series of oblong plate-like blades 8 that jut out cantilevered from a same face of the discoidal portion, extend towards the bottom of the cup-shaped body 3 more or less parallel to the longitudinal axis L, and preferably are finally distributed, preferably in substantially regular manner, along the perimeter edge of the same discoidal portion, .

In addition, the impeller 7 is preferably connected in angularly rigid and axially slidable manner to the oblong central hub 2, or rather to the straight tubular quill 10 of oblong central hub 2, via at least one protruding pin 16 that extends cantilevered from the oblong central hub 2, or rather from the straight tubular quill 10, in a substantially radial direction and engages in free slidable manner an oblong groove 17 that extends on the tubular central portion 18 of impeller 7, and is preferably substantially helicoidal in shape.

The protruding pin 16 locks the impeller 7 in angularly rigid manner to the oblong central hub 2 when it is located in abutment against the upper end (see Figure 5) or the lower end (see Figure 4) of the oblong groove 17, and arranges itself in abutment on the upper end (see Figure 5) or the lower end (see Figure 4) of the oblong groove 17 depending on the rotating direction of the oblong central hub 2, while axially moving the impeller 7 along the oblong central hub 2.

General operation of the foodstuff thermal-treating machine 100, or rather of the pasteurizing machine, is easy inferable from the above description and therefore requires no further explanation.

As regards the rotatable mixing member 1, when the impeller 7 is in the first operating position (see Figure 4), the rotatable mixing member 1 works as a centrifugal pump which sucks the milk from the central through-hole 4 of the cup-shaped body 3 and expels it through the small through-openings 6 on the cylindrical side wall of cup-shaped body 3, thereby causing the breakdown of fat globules in suspension in the milk.

When it is in the second operating position (see Figure 5), on the other hand, the impeller 7 can gently mix the milk in the working tank 102.

The electronic control unit of the machine 100, in turn, can alternately place the impeller 7 in the first (see Figure 4) or in the second operating position (see Figure 5) by suitably selecting a clockwise or anticlockwise rotating direction of the rotatable shaft 108.

Preferably, the electronic control unit is moreover programmed/configured so as to automatically change the rotating direction of the rotatable shaft 108 during the milk pasteurization cycle/process.

In more detail, the electronic control unit is preferably programmed/configured so as to change, during the milk pasteurization cycle/process, the rotating direction of the rotatable shaft 108 according to a predetermined time sequence. Preferably, the predetermined time sequence is moreover manually selectable by the user from a series of preset time sequences stored in the electronic control unit.

Additionally or alternatively, the electronic control unit is preferably moreover programmed/configured so that the clockwise or anti-clockwise rotating direction of the rotatable shaft 108 is selected according to the current temperature of the milk in the working tank 103.

In more detail, the electronic control unit is preferably also programmed/configured so as to arranged/bring the impeller 7 of the rotatable mixing member 1 in the first operating position (see Figure 4) when the temperature of the milk in the working tank 103 is higher than 70°C.

The advantages deriving from the particular structure of the mixing member 1 are many.

Experimental tests have shown that, in the first operating position, the rotatable mixing member 1 can homogenize milk or other liquids more effectively and efficiently than any other rotatable mixing member currently on the market.

In addition, depending on the axial position taken by the impeller 7, the rotatable mixing member 1 is able both to vigorously homogenize the milk contained in the working tank 103 (impeller 7 in the first operating position), and to gently mix the milk contained in the working tank 103 (impeller 7 in the second operating position), thus optimizing the operation of the foodstuff thermal-treating machine 100, or rather of the pasteurizing machine.

The milk pasteurization process, in fact, comprises an initial, relatively short step (a few minutes), during which the milk is brought to a high temperature and homogenized, and a final, much longer step (even longer than 5 hours) during which the milk is kept in motion at a temperature lower than 50°C, and more conveniently lower than 10°C.

The rotatable mixing member 1 works very well both in the initial and the final steps of the pasteurization process and therefore does not require the user of the pasteurizing machine to replace the mixing member in between the steps of the milk pasteurization process, as it happens instead in the pasteurizing machines currently on the market.

Lastly, the rotatable mixing member 1 can be easily installed in the pasteurizing machines already on the market, with all the benefits that this entails.

It is finally clear that modifications and variations may be made to the rotatable mixing member 1 and to the foodstuff thermal-treating machine 100, or rather to the pasteurizing machine, described above without however departing from the scope of the present invention.

For example, instead of being used in milk pasteurization, the rotatable mixing member 1 can be used to homogenize/mix a liquid mixture of ice cream, custard or other similar product, during the thermal treatment of the same mixture.

In other words, the foodstuff thermal-treating machine 100 with the rotatable mixing member 1 may also be used to mix and homogenize the mixture of ingredients (water, milk, sugars, fruit extracts, natural flavourings, etc.) for the production of artisan ice cream, during the thermal treatment of the same mixture.

Lastly, in a less-sophisticated not-shown alternative embodiment, the oblong central hub 2 of rotatable mixing member 1 can be made in one piece with the rotatable shaft 108.

## Claims

1. A rotatable mixing member (1) for pasteurizing machines and the like (100) adapted to be accommodated in axially rotatable manner inside the working tank (103) of a pasteurizing machine or the like (100), for mixing and homogenizing milk or other liquids contained in said working tank (103);
the rotatable mixing member (1) comprising: an oblong central hub (2) adapted to be driven into rotation around the longitudinal axis (L) thereof; a cup-shaped body (3), which is fitted with clearance on the oblong central hub (2) and is provided, on the peripheral wall, with a series of small fat-breaking through-openings (6) which are shaped and dimensioned so as to cause the breakdown of fat globules in suspension in the milk or other liquid; and an impeller (7) which is fitted on the oblong central hub (2) in angularly rigid manner and with the capability of moving axially along said oblong central hub (2) between a first operating position in which the impeller (7) is at a predetermined minimum distance from the bottom/ crown of the cup-shaped body (3), and a second operating position in which the impeller (7) is at a predetermined maximum distance from the bottom/crown of the cup-shaped body (3);
the rotatable mixing member (1) **being characterised in that** said impeller (7) is mechanically coupled to the oblong central hub (2) so as to arrange itself in the first operating position when the oblong central hub (2) rotates in a clockwise direction, and to arrange itself in the second operating position when the oblong central hub (2) rotates in an anticlockwise direction, or vice versa.

2. The rotatable mixing member according to Claim 1, **characterised by** additionally comprising a rigid framework (5) adapted to support and keep the cup-shaped body (3) substantially coaxial to the oblong central hub (2).

3. The rotatable mixing member according to Claim 2, wherein the rigid framework (5) is adapted to prevent the cup-shaped body (3) from rotating together with the oblong central hub (2).

4. The rotatable mixing member according to Claim 2 or 3, wherein the rigid framework (5) is adapted to be arranged in abutment on the bottom of the working tank (103).

5. The rotatable mixing member according to any one of the preceding claims, wherein the cup-shaped body (3) is substantially cylindrical in shape, and is fitted onto the oblong central hub (2) with the concavity facing the lower end of the oblong central hub (2).

6. The rotatable mixing member according to any one of the preceding claims, wherein the impeller (7) has a shape substantially complementary to that of the cavity of the cup-shaped body (3).

7. The rotatable mixing member according to any one of the preceding claims, wherein the impeller (7) is cup-shaped and is fitted onto the oblong central hub (2) with the concavity facing the cup-shaped body (3).

8. The rotatable mixing member according to any one of the preceding claims, wherein the impeller (7), in the first operating position, is substantially entirely contained inside the cup-shaped body (3).

9. The rotatable mixing member according to any one of the preceding claims, wherein the impeller (7), in the second operating position, at least partially protrudes outside of the cup-shaped body (3), so that the blades (8) of the impeller jut out outside of the cup-shaped body (3) or are entirely placed outside of the cup-shaped body (3).

10. The rotatable mixing member according to any one of the preceding claims, wherein the impeller (7) is connected in angularly rigid and axially slidable manner to the oblong central hub (2), via at least one protruding pin (16) that extends cantilevered from the oblong central hub (2) and engages, in free slidable manner, an oblong groove (17) that extends on the tubular central portion (18) of the impeller (7) .

11. The rotatable mixing member according to Claim 10, wherein the oblong groove (17) is substantially helicoidal.

12. The rotatable mixing member according to any one of the preceding claims, wherein the oblong central hub (2) is structured so as to be fittable in angularly rigid and easily removable manner on a supporting shaft (108) that juts out cantilevered from the bottom of the working tank (103).

13. A foodstuff thermal-treating machine (100) comprising: a working tank (103) intended to contain the liquid to be treated; a heating assembly (109) capable of bringing to and maintaining the working tank (103) and the contents thereof at a predetermined temperature greater than +50°C; a rotatable mixing member (1) fixed in angularly rotatable manner on the bottom of the working tank (103); and a motor assembly capable of driving into rotation the rotatable mixing member (1) around the longitudinal axis (L) thereof;
the machine (100) being **characterised in that** said rotatable mixing member (1) is realized according to any one of the Claims from 1 to 12, **and in that** said motor assembly is adapted to drive into rotation the rotatable mixing member (1) with a rotating direction that can be varied on command.

14. The foodstuff thermal-treating machine according to Claim 13, **characterised by** additionally comprising a cooling assembly capable of bringing and maintaining the working tank (103) and the contents thereof to/at a predetermined temperature ranging between +0°C and +10°C.

15. The foodstuff thermal-treatment machine according to Claim 13 or 14, wherein the rotatable mixing member (1) is fitted in angularly rigid and manually removable manner on a supporting shaft (108) that juts out cantilevered from the bottom of the working tank (103) while remaining parallel to the tank longitudinal axis (A) ; the motor assembly being adapted to drive into rotation said supporting shaft (8) around the longitudinal axis thereof.

## Patentansprüche

1. Rotierendes Mischelement (1) für Pasteurisierungsmaschinen und dergleichen (100), das angepasst ist, um innerhalb des Arbeitstanks (103) einer Pasteurisierungsmaschine oder dergleichen (100) axial rotierend untergebracht zu sein, um in dem Arbeitstank (103) enthaltene Milch oder andere Flüssigkeiten zu mischen und zu homogenisieren;
wobei das rotierende Mischelement (1) umfasst: eine längliche zentrale Nabe (2), die angepasst ist, um um die Längsachse (L) davon in Rotation versetzt zu werden; einen becherförmigen Körper (3), der mit Spiel auf der länglichen zentralen Nabe (2) aufgesetzt ist und an der Umfangswand mit einer Reihe kleiner fettbrechender Durchgangsöffnungen (6) versehen ist, die so geformt und bemessen sind, dass sie den Zerfall von Fettkügelchen in Suspension in der Milch oder anderen Flüssigkeit bewirken; und ein Laufrad (7), das auf der länglichen zentralen Nabe (2) winkelstarr aufgesetzt ist und die Fähigkeit besitzt, sich axial entlang der länglichen zentralen Nabe (2) zwischen einer ersten Betriebsposition, in der das Laufrad (7) in einer vorbestimmten minimalen Distanz von dem Boden/der Krone des becherförmigen Körpers (3) liegt, und einer zweiten Betriebsposition, in der das Laufrad (7) in einer vorbestimmten maximalen Distanz von dem Boden/der Krone des becherförmigen Körpers (3) liegt, zu bewegen;
wobei das rotierende Mischelement (1) **dadurch gekennzeichnet ist, dass** das Laufrad (7) mit der länglichen zentralen Nabe (2) so mechanisch gekoppelt ist, dass es sich selbst in der ersten Betriebsposition anordnet, wenn die längliche zentrale Nabe (2) im Uhrzeigersinn rotiert, und sich selbst in der zweiten Betriebsposition anordnet, wenn die längliche zentrale Nabe (2) gegen den Uhrzeigersinn rotiert, oder umgekehrt.

2. Rotierendes Mischelement nach Anspruch 1, **dadurch gekennzeichnet, dass** es zusätzlich einen starren Rahmen (5) umfasst, der angepasst ist, um den becherförmigen Körper (3) im Wesentlichen koaxial zu der länglichen zentralen Nabe (2) zu tragen und zu halten.

3. Rotierendes Mischelement nach Anspruch 2, wobei der starre Rahmen (5) angepasst ist, um zu verhindern, dass der becherförmige Körper (3) zusammen mit der länglichen zentralen Nabe (2) rotiert.

4. Rotierendes Mischelement nach Anspruch 2 oder 3, wobei der starre Rahmen (5) angepasst ist, um in Anlage an dem Boden des Arbeitstanks (103) angeordnet zu sein.

5. Rotierendes Mischelement nach einem der vorhergehenden Ansprüche, wobei der becherförmige Körper (3) im Wesentlichen zylinderförmig ist und auf die längliche zentrale Nabe (2) aufgesetzt ist, wobei die Konkavität dem unteren Ende der länglichen zentralen Nabe (2) zugewandt ist.

6. Rotierendes Mischelement nach einem der vorhergehenden Ansprüche, wobei das Laufrad (7) eine Form aufweist, die im Wesentlichen komplementär zu der des Hohlraums des becherförmigen Körpers (3) ist.

7. Rotierendes Mischelement nach einem der vorhergehenden Ansprüche, wobei das Laufrad (7) becherförmig ist und auf die längliche zentrale Nabe (2) aufgesetzt ist, wobei die Konkavität dem becherförmigen Körper (3) zugewandt ist.

8. Rotierendes Mischelement nach einem der vorhergehenden Ansprüche, wobei das Laufrad (7) in der ersten Betriebsposition im Wesentlichen vollständig innerhalb des becherförmigen Körpers (3) enthalten ist.

9. Rotierendes Mischelement nach einem der vorhergehenden Ansprüche, wobei das Laufrad (7) in der zweiten Betriebsposition zumindest teilweise außerhalb des becherförmigen Körpers (3) vorsteht, sodass die Schaufeln (8) des Laufrads außerhalb des becherförmigen Körpers (3) herausragen oder vollständig außerhalb des becherförmigen Körpers (3) platziert sind.

10. Rotierendes Mischelement nach einem der vorhergehenden Ansprüche, wobei das Laufrad (7) über mindestens einen vorstehenden Stift (16), der sich auskragend von der länglichen zentralen Nabe (2) erstreckt und frei verschiebbar in eine längliche Nut (17) eingreift, die sich an dem rohrförmigen zentralen Abschnitt (18) des Laufrads (7) erstreckt, winkelstarr und axial verschiebbar mit der länglichen zentralen Nabe (2) verbunden ist.

11. Rotierendes Mischelement nach Anspruch 10, wobei die längliche Nut (17) im Wesentlichen schraubenförmig ist.

12. Rotierendes Mischelement nach einem der vorhergehenden Ansprüche, wobei die längliche zentrale Nabe (2) so strukturiert ist, dass sie winkelstarr und leicht abnehmbar auf einer Tragwelle (108) aufsetzbar ist, die auskragend aus dem Boden des Arbeitstanks (103) herausragt.

13. Maschine (100) zur thermischen Behandlung von Nahrungsmitteln, umfassend: einen Arbeitstank (103), der dazu vorgesehen ist, die zu behandelnde Flüssigkeit zu enthalten; eine Heizbaugruppe (109), die imstande ist, den Arbeitstank (103) und die Inhalte davon auf eine vorbestimmte Temperatur von mehr als +50°C zu bringen und bei dieser zu halten; ein rotierendes Mischelement (1), das winkelmäßig rotierend an dem Boden des Arbeitstanks (103) befestigt ist; und eine Motorbaugruppe, die imstande ist, das rotierende Mischelement (1) um die Längsachse (L) davon in Rotation zu versetzen;
wobei die Maschine (100) **dadurch gekennzeichnet ist, dass** das rotierende Mischelement (1) nach einem der Ansprüche 1 bis 12 realisiert ist **und dass** die Motorbaugruppe angepasst ist, um das rotierende Mischelement (1) mit einer Rotationsrichtung in Rotation zu versetzen, die auf Befehl variiert werden kann.

14. Maschine zur thermischen Behandlung von Nahrungsmitteln nach Anspruch 13, **dadurch gekennzeichnet, dass** sie zusätzlich eine Kühlbaugruppe umfasst, die imstande ist, den Arbeitstank (103) und die Inhalte davon auf eine/r vorbestimmte/n Temperatur im Bereich zwischen +0°C und +10°C zu bringen und zu halten.

15. Maschine zur thermischen Behandlung von Nahrungsmitteln nach Anspruch 13 oder 14, wobei das rotierende Mischelement (1) winkelstarr und von Hand abnehmbar auf einer Tragwelle (108) aufgesetzt ist, die auskragend aus dem Boden des Arbeitstanks (103) herausragt, während sie parallel zu der Tanklängsachse (A) bleibt; wobei die Motorbaugruppe angepasst ist, um die Tragwelle (8) um die Längsachse davon in Rotation zu versetzen.

## Revendications

1. Élément de mélange rotatif (1) pour machines de pasteurisation et similaires (100) conçu pour être logé de manière axialement rotative à l'intérieur de la cuve de travail (103) d'une machine de pasteurisation ou similaires (100), pour mélanger et homogénéiser du lait ou d'autres liquides contenus dans ladite cuve de travail (103) ;
l'élément de mélange rotatif (1) comprenant : un moyeu central oblong (2) conçu pour être entraîné en rotation autour de l'axe longitudinal (L) ce celui-ci ; un corps en forme de coupelle (3), qui est emboîté avec du jeu sur le moyeu central oblong (2) et est muni, sur la paroi périphérique, d'une série de petites ouvertures traversantes de rupture de graisse (6) qui sont façonnées et dimensionnées de façon à provoquer la rupture de globules de graisse en suspension dans le lait ou un autre liquide ; et une roue à aubes (7) qui est emboîtée sur le moyeu central oblong (2) de manière angulairement rigide et avec la capacité de se déplacer axialement le long dudit moyeu central oblong (2) entre une première position de fonctionnement dans laquelle la roue à aubes (7) est à une distance minimale prédéterminée du fond/sommet du corps en forme de coupelle (3), et une seconde position de fonctionnement dans laquelle la roue à aubes (7) est à une distance maximale prédéterminée du fond/sommet du corps en forme de coupelle (3) ;
l'élément de mélange rotatif (1) **étant caractérisé en ce que** ladite roue à aubes (7) est mécaniquement couplée au moyeu central oblong (2) de façon à s'agencer elle-même dans la première position de fonctionnement lorsque le moyeu central oblong (2) tourne dans une direction horaire, et à s'agencer elle-même dans la seconde position de fonctionnement lorsque le moyeu central oblong (2) tourne dans une direction anti-horaire, ou vice-versa.

2. Élément de mélange rotatif selon la revendication 1, **caractérisé par le fait qu'**il comprend en outre une armature rigide (5) conçue pour soutenir et tenir le corps en forme de coupelle (3) sensiblement coaxial au moyeu central oblong (2).

3. Élément de mélange rotatif selon la revendication 2, dans lequel l'armature rigide (5) est conçue pour empêcher le corps en forme de coupelle (3) de tourner conjointement avec le moyeu central oblong (2).

4. Élément de mélange rotatif selon la revendication 2 ou 3, dans lequel l'armature rigide (5) est conçue pour être agencée en butée sur le fond de la cuve de travail (103).

5. Élément de mélange rotatif selon l'une quelconque des revendications précédentes, dans lequel le corps en forme de coupelle (3) est de forme sensiblement cylindrique, et est emboîté sur le moyeu central oblong (2) avec la concavité faisant face à l'extrémité inférieure du moyeu central oblong (2).

6. Élément de mélange rotatif selon l'une quelconque des revendications précédentes, dans lequel la roue à aubes (7) possède une forme sensiblement complémentaire à celle de la cavité du corps en forme de coupelle (3).

7. Élément de mélange rotatif selon l'une quelconque des revendications précédentes, dans lequel la roue à aubes (7) est en forme de coupelle et est emboîtée sur le moyeu central oblong (2) avec la concavité faisant face au corps en forme de coupelle (3).

8. Élément de mélange rotatif selon l'une quelconque des revendications précédentes, dans lequel la roue à aubes (7), dans la première position de fonctionnement, est sensiblement entièrement contenue à l'intérieur du corps en forme de coupelle (3) .

9. Élément de mélange rotatif selon l'une quelconque des revendications précédentes, dans lequel la roue à aubes (7), dans la seconde position de fonctionnement, fait au moins partiellement saillie à l'extérieur du corps en forme de coupelle (3), de sorte que les aubes (8) de la roue à aubes dépassent à l'extérieur du corps en forme de coupelle (3) ou soient entièrement placées à l'extérieur du corps en forme de coupelle (3).

10. Élément de mélange rotatif selon l'une quelconque des revendications précédentes, dans lequel la roue à aubes (7) est reliée de manière angulairement rigide et axialement coulissante au moyeu central oblong (2), via au moins une goupille saillante (16) qui s'étend en porte-à-faux à partir du moyeu central oblong (2) et se met en prise, de manière libre de coulisser, avec une rainure oblongue (17) qui s'étend sur la partie centrale tubulaire (18) de la roue à aubes (7).

11. Élément de mélange rotatif selon la revendication 10, dans lequel la rainure oblongue (17) est sensiblement hélicoïdale.

12. Élément de mélange rotatif selon l'une quelconque des revendications précédentes, dans lequel le moyeu central oblong (2) est structuré de façon à être apte à être emboîté de manière angulairement rigide et facilement amovible sur un arbre de support (108) qui dépasse en porte-à-faux du fond de la cuve de travail (103).

13. Machine de traitement thermique de denrées alimentaires (100) comprenant : une cuve de travail (103) destinée à contenir le liquide devant être traité ; un ensemble chauffant (109) capable d'amener et de maintenir la cuve de travail (103) et le contenu de celle-ci à une température prédéterminée supérieure à +50 °C ; un élément de mélange rotatif (1) fixé de manière angulairement rotative sur le fond de la cuve de travail (103) ; et un ensemble moteur capable d'entraîner en rotation l'élément de mélange rotatif (1) autour de l'axe longitudinal (L) de celui-ci ;
la machine (100) étant **caractérisée en ce que** ledit élément de mélange rotatif (1) est réalisé selon l'une quelconque des revendications 1 à 12, **et en ce que** ledit ensemble moteur est conçu pour entraîner en rotation l'élément de mélange rotatif (1) avec une direction de rotation qui peut être modifiée sur commande.

14. Machine de traitement thermique de denrées alimentaires selon la revendication 13, **caractérisée par le fait qu'**elle comprend en outre un ensemble de refroidissement capable d'amener et de maintenir la cuve de travail (103) et le contenu de celle-ci jusqu'à/à une température prédéterminée variant entre +0 °C et +10 °C.

15. Machine de traitement thermique de denrées alimentaires selon la revendication 13 ou 14, dans laquelle l'élément de mélange rotatif (1) est emboîté de manière angulairement rigide et manuellement amovible sur un arbre de support (108) qui dépasse en porte-à-faux du fond de la cuve de travail (103) tout en restant parallèle à l'axe longitudinal (A) de la cuve ; l'ensemble moteur étant conçu pour entraîner en rotation ledit arbre de support (8) autour de l'axe longitudinal de celui-ci.
